# EUROPÄISCHE PATENTSCHRIFT

(11) **EP 3 164 735 B1**
(45) Veröffentlichungstag und Bekanntmachung des Hinweises auf die Patenterteilung: **24.02.2021**
(21) Anmeldenummer: 15719966.2
(22) Anmeldetag: 24.04.2015
(51) Int. Cl.: G01S 17/04, G01S 17/931, G01S 17/02, G01S 17/08, G01S 17/93, G01S 7/48, G01S 7/481

(54) **TIME-OF-FLIGHT-KAMERA, KRAFTFAHRZEUG UND VERFAHREN ZUM BETRIEB EINER TIME-OF-FLIGHT-KAMERA IN EINEM KRAFTFAHRZEUG**
TIME-OF-FLIGHT CAMERA, MOTOR VEHICLE, AND METHOD FOR OPERATING A TIME-OF-FLIGHT CAMERA IN A MOTOR VEHICLE
CAMÉRA TEMPS DE VOL, VÉHICULE AUTOMOBILE ET PROCÉDÉ POUR FAIRE FONCTIONNER UNE CAMÉRA TEMPS DE VOL DANS UN VÉHICULE AUTOMOBILE

(30) Priorität: 03.07.2014 DE 102014009860
(43) Veröffentlichungstag der Anmeldung: 10.05.2017
(73) Patentinhaber: Audi AG, 85045 Ingolstadt (DE)
(72) Erfinder: DALBAH, Yosef, 85049 Ingolstadt (DE)
(74) Vertreter: Thielmann, Frank
(86) Internationale Anmeldenummer: PCT/EP2015/000850
(87) Internationale Veröffentlichungsnummer: WO 2016/000800

(56) Entgegenhaltungen:
- EP-A1- 1 467 225
- EP-A2- 1 342 989
- DE-A1- 10 059 891
- DE-A1- 10 124 433
- DE-A1- 19 933 877
- DE-A1-102006 008 139
- DE-A1-102009 045 555
- DE-A1-102012 002 922

## Beschreibung

Die Erfindung betrifft eine Time-of-Flight-Kamera, umfassend eine Beleuchtungseinheit mit einer Lichtquelle zur Ausleuchtung eines Ausleuchtungsbereichs einer Umgebung mit Licht, insbesondere Infrarotlicht, und einer Strahlformoptik und einen Bildsensor mit einer vorgeschalteten Optikeinheit, insbesondere einer Weitwinkeloptikeinheit, zur Vermessung des von der Umgebung reflektierten Lichts in einem Erfassungsbereich. Daneben betrifft die Erfindung ein Kraftfahrzeug und ein Verfahren zum Betrieb einer Time-of-Flight-Kamera in einem Kraftfahrzeug.

Time-of-Flight-Kameras (oft auch kurz ToF-Kameras) sind im Stand der Technik bereits weitgehend bekannt. Dabei handelt es sich um dreidimensionale Kamerasysteme, die mit dem Laufzeitverfahren (Time-of-Flight, ToF) arbeiten, um Abstände der in verschiedenen Bildpunkten (Pixeln) gezeigten Objekte von der Time-of-Flight-Kamera zu bestimmen. Dazu wird die aufzunehmende Szene mittels eines Lichtpulses ausgeleuchtet, wozu Time-of-Flight-Kameras üblicherweise eine Beleuchtungseinheit umfassen. Diese enthält eine Lichtquelle, beispielsweise bei Kraftfahrzeugen eine LED, und eine Strahlformoptik, um einen geeigneten Ausleuchtungsbereich zu erzielen, der sich bei herkömmlichen Time-of-Flight-Kameras oft mit dem Erfassungsbereich des Bildsensors deckt, der mit seiner vorgeschalteten Optikeinheit beispielsweise Teil einer Empfangseinheit sein kann. Die Time-of-Flight-Kamera misst für jeden Bildpunkt die Zeit, die das Licht bis zum Objekt und wieder zurück benötigt. Die benötigte Zeit ist direkt proportional zur Distanz. Die Laufzeit des emittierten und reflektierten Lichts wird dabei üblicherweise durch die Phasendifferenz zwischen dem emittierten und dem empfangenen Licht vermessen, wozu die Beleuchtungseinheit und der Bildsensor üblicherweise über einen Modulator der Time-of-Flight-Kamera gemeinsam mit einer Modulationsfrequenz einer bestimmten Phasenlage beaufschlagt werden. Diese Phasenlage hat auch das ausgesendete Licht der Beleuchtungseinheit. Nachdem das Licht von einem Objekt reflektiert wird, trifft es aufgrund der zurückgelegten Wegstrecke entsprechend phasenverschoben mit einer geänderten Phasenlage auf dem Bildsensor ein, wo beispielsweise eine Mischung des Signals des Modulators mit dem empfangenen Signal stattfinden kann, um die Phasenverschiebung und somit die Laufzeit und die Entfernung des Objekts zu ermitteln.

Ein bevorzugtes Einsatzgebiet für Time-of-Flight-Kameras ist die Umfelderfassung in Kraftfahrzeugen. Dort können hochauflösende, moderne Time-of-Flight-Kameras verwendet werden, die beispielsweise moduliertes Infrarotlicht in die Umgebung abstrahlen und aus dem reflektierten Signal die Distanz zu Objekten in der Umgebung bestimmen können. Bevorzugt werden hierbei Weitwinkel-Time-of-Flight-Kameras eingesetzt, die einen sehr großen Öffnungswinkel abdecken können. Die Sensordaten der Time-of-Flight-Kameras können dann beispielsweise in ein von Fahrzeugsystemen genutztes Umfeldmodell eingehen-und/oder unmittelbar Fahrzeugsystemen zur Verfügung gestellt werden, beispielsweise Fahrerassistenzsystemen

Dokument DE102009045555 A1 offenbart ein Time-of-Flight-Kamerasystem mit einem Beleuchtungsmodul und einer 3D-Kamera. Mittels dem Beleuchtungsmodul wird ein Beleuchtungsbereich beleuchtet, innerhalb dem ein Empfangsbereich der 3D-Kamera 200 liegt. Der Empfangsbereich beträgt gemäß Absatz mindestens 70 % des Beleuchtungsbereichs, wobei im Idealfall die beiden Bereiche und aneinander angepasst sind. Mehrere Beleuchtungseinheiten können vorgesehen sein, wobei die Beleuchtungseinheiten mittels Schwenken gezielt ausgerichtet werden, um einen geeigneten Beleuchtungsbereich zu realisieren oder um eine gewünschte Intensitätsverteilung innerhalb des Beleuchtungsbereichs zu bewirken.

Dokument EP1467225 A1 betrifft eine Einparkhilfe für ein Fahrzeug, bei der ein 3D-Sensorsystem nacheinander verschiedene nebeneinander liegende Teilbilder beziehungsweise schmale Bereiche einer Parklücke aufnimmt. Um dieses Abscannen der Parklücke zu ermöglichen, ist das 3D Sensorsystem verschwenkbar angeordnet.

Problematisch bei in Kraftfahrzeugen eingesetzten Time-of-Flight-Kameras ist, dass, um eine hohe Genauigkeit auch in hoher Reichweite der Time-of-Flight-Kameras zu erzielen, eine starke Beleuchtung der Umgebung notwendig. Dies führt zu erhöhten Kosten und einem erhöhten Energieverbrauch, so dass heute häufig mit geringeren Reichweiten und geringerer Auflösung gearbeitet werden muss.

Der Erfindung liegt daher die Aufgabe zugrunde, eine Möglichkeit anzugeben, die Reichweite und Genauigkeit der Sensordaten von Time-of-Flight-Kameras, wie sie in Kraftfahrzeugen eingesetzt werden, zu verbessern, insbesondere ohne Verwendung teurer, starker Lichtquellen.

Zur Lösung dieser Aufgabe ist eine Time-of-Flight-Kamera gemäß Anspruch 1 vorgesehen.

Es wird mithin vorgeschlagen, das zur Messung notwendige Licht, insbesondere Infrarotlicht, derart zu fokussieren, dass der Ausleuchtungsbereich nicht mehr zwangsläufig dem gesamten Erfassungsbereich des Bildsensors entspricht. Durch eine schwenkbare Beleuchtungseinheit kann das Licht dennoch in verschiedene, zu vermessende Ausleuchtungsbereiche, die insbesondere den gesamten Erfassungsbereich abdecken, gelenkt werden. Auf diese Art und Weise gelangt eine erhöhte Menge an Licht in spezielle Interessensbereiche, so dass dort eine höhere Reichweite und eine höhere Genauigkeit erzielt werden kann. Ist mithin bekannt, wo, also in welchem Ausleuchtungsbereich, zweckmäßig gemessen werden soll, kann gezielt dieser Ausleuchtbereich so ausgeleuchtet werden, dass eine höhere Reichweite und eine verbesserte Datenqualität gegeben ist. Kritische Bereiche können besonders stark ausgeleuchtet werden. Dennoch wird trotz der erhöhten Reichweite und der höheren Genauigkeit keine stärkere Lichtquelle benötigt, so dass insbesondere dann, wenn die heutigen Reichweiten nur in den Ausleuchtungsbereichen aufrechterhalten werden sollen, auch Lichtquellen geringerer Leistung eingesetzt werden können, was zu niedrigeren Kosten, niedrigerem Energieverbrauch und zu einem kleineren Bedarf für Bauraum führt.

Eine besonders bevorzugte Ausgestaltung der vorliegenden Erfindung sieht vor, dass die Beleuchtungseinheit zusätzliche eine anpassbare Fokussierungsoptik für das von der Lichtquelle ausgesandte Licht aufweist. Das bedeutet, zusätzlich zu der Strahlformoptik kann eine anpassbare Fokussierungsoptik vorgesehen sein, so dass der Ausleuchtungsbereich (und insbesondere damit auch die Reichweite/Helligkeit des Lichts im Ausleuchtungsbereich) angepasst werden kann. Auf diese Weise können also je nach Anwendungsfall unterschiedliche Ausleuchtungsbereiche realisiert werden, wenn die Fokussierungsoptik geeignet angesteuert wird, insbesondere gemeinsam mit der Schwenkeinrichtung. Besonders vorteilhaft ist es dabei, wenn die anpassbare Fokussierungsoptik eine Einstellung aufweist, in der bei zentraler Ausrichtung der Beleuchtungseinheit der gesamte Erfassungsbereich ausgeleuchtet wird. Dann ist mithin ein Grundbetriebsmodus denkbar, in dem der Ausleuchtungsbereich aufgrund der Ausrichtung der Beleuchtungseinheit (durch die Schwenkeinrichtung mittig positioniert) und die Einstellung der anpassbaren Fokussierungsoptik dem Erfassungsbereich entspricht, so dass, wenn auch mit geringerer Reichweite und gegebenenfalls niedrigerer Qualität, Daten für den gesamten Erfassungsbereich erhalten werden können. Wird festgestellt, dass ein bestimmter, kleinerer Ausleuchtungsbereich relevant ist, kann durch entsprechende Ansteuerung der Fokussierungsoptik und der Schwenkeinrichtung dieser Ausleuchtungsbereich ausgewählt werden, so dass die Menge an Licht auf einen geringeren Öffnungswinkel verteilt wird und somit die Reichweite und die Genauigkeit entsprechend erhöht werden.

Um diese und sonstige Einstellungen von Ausleuchtungsbereichen zu ermöglichen, kann die Time-of-Flight-Kamera eine Steuereinrichtung aufweisen, die zur Einstellung eines Ausleuchtungsbereichs durch Ansteuerung der Schwenkeinrichtung ausgebildet ist. Weist die Beleuchtungseinheit auch eine anpassbare Fokussierungsoptik auf, kann selbstverständlich auch diese in die Ansteuerung zur Einstellungeines Ausleuchtungsbereichs einbezogen werden.

Dabei ist es besonders zweckmäßig, wenn die Steuereinrichtung zur Auswahl des Ausleuchtungsbereichs in Abhängigkeit eines von extern zugeführten Steuersignals ausgebildet ist. Im Beispiel der Anwendung in einem Kraftfahrzeug wird meist an anderer Stelle, beispielsweise in einem Steuergerät, das wenigstens einem Fahrzeugsystem zugeordnet ist, entschieden, aus welchem Anteil des Erfassungsbereichs Daten in der aktuellen Betriebssituation des Kraftfahrzeugs tatsächlich benötigt werden, so dass sich hieraus der Ausleuchtungsbereich ergibt, der durch das Steuersignal beschrieben werden kann, welches von der Steuereinrichtung ausgewertet wird und zur korrekten Einstellung des Ausleuchtungsbereichs genutzt wird.

Wie bereits dargelegt wurde, ist es zweckmäßig, wenn die Steuereinrichtung zur Einstellung einer Reichweite und Ausdehnung des Erfassungsbereichs durch Ansteuerung der anpassbaren Fokussierungsoptik ausgebildet ist, wenn diese vorgesehen ist. Zusätzlich kann vorgesehen sein, dass die Steuereinrichtung zur Einstellung einer Reichweite durch Ansteuerung der Helligkeit der regelbaren Lichtquelle ausgebildet ist. Das bedeutet, es ist auch denkbar, eine in ihrer Helligkeit regelbare Lichtquelle zu verwenden, deren Helligkeit letztlich ein Maß für die Reichweite darstellt, bis zu der eine sinnvolle Ausleuchtung von Objekten in der Umgebung erfolgt, deren Reflexion durch die Empfangseinheit noch vermessen werden kann. Über die Fokussierungsoptik wird wenigstens eingestellt, über welchen Öffnungswinkel sich die Lichtquelle verteilen kann, wobei selbstverständlich auch Ausgestaltungen denkbar sind, in denen das Profil des Ausleuchtungsbereichs durch die Fokussierungsoptik weitergehender beeinflussbar ist, um letztlich weitgehend frei konfigurierbare Ausleuchtungsbereiche zu erhalten. In jenem Fall bestimmt die Ausdehnung des Ausleuchtungsbereichs, auf welchen Bereich die Lichtmenge verteilt wird, mithin wie hell der Ausleuchtungsbereich tatsächlich ausgeleuchtet wird, so dass hiermit auch die Reichweite veränderbar ist.

Dabei sei an dieser Stelle angemerkt, dass für die Fokussierungsoptik beliebige veränderbare Optikelemente eingesetzt werden können, wie sie im Stand der Technik bekannt sind, beispielsweise bewegbare Linsen, in ihren Eigenschaften und/oder ihrer Form veränderbare Linsen, Reflektoren und dergleichen.

Wenn keine anpassbare Fokussierungsoptik vorgesehen ist oder wenn durch die Fokussierungsoptik der Ausleuchtungsbereich nicht auf den gesamten Erfassungsbereich erweitert werden kann, ist die vorliegenden Erfindung vorgesehen , dass die Steuereinrichtung zur Ansteuerung der Schwenkeinrichtung zur kontinuierlichen Verschwenkung der Beleuchtungseinheit zur Ausleuchtung über Zeit eines interessierenden Bereichs, der größer als der Ausleuchtungsbereich ist, ausgebildet ist, so dass der Ausleuchtungsbereich den interessierenden Bereich in einer bestimmten Zeit derart überstreicht, dass ein Abscannen des interessierenden Bereichs erfolgt. In diesem Fall überstreicht also der Ausleuchtungsbereich in einer bestimmten Zeit den interessierenden Bereich, insbesondere den gesamten Erfassungsbereich, so dass eine Art "abscannen" des interessierenden Bereichs, insbesondere des gesamten Erfassungsbereichs, erfolgt, was es ermöglicht, trotz eingeschränkter Ausleuchtungsbereiche dennoch Informationen aus dem gesamten Erfassungsbereich zu erhalten. Geschieht dies mit einer hinreichend großen Frequenz, ist eine derartige Ausführungsform auch bei bewegter Time-of-Flight-Kamera, beispielsweise also bei Verwendung in einem Kraftfahrzeug, möglich.

Die Schwenkeinrichtung kann auf verschiedene Art und Weise realisiert werden. Dabei ist zu beachten, dass die Erfindung gegenüber einer im Ganzen verschwenkbaren Time-of-Flight-Kamera den Vorteil aufweist, dass lediglich die Beleuchtungseinheit zu verschwenken ist, welche im Idealfall gewichtsarm reduziert werden kann, insbesondere dann, wenn als Lichtquelle eine Leuchtdiode (LED) verwendet wird. Strahlformoptiken bzw. Fokussierungsoptiken können dann ebenso klein ausgeführt werden und unmittelbar auf eine Leiterplatte, die auch die LED trägt, aufgesetzt sein, so dass zur Verschwenkung äußerst wenig Energie erforderlich ist und kleinbauende Komponenten der Verschwenkungseinrichtung eingesetzt werden können. Insbesondere ist es dann möglich, dass die Schwenkeinrichtung einen piezoelektrischen Aktor aufweist. Im Allgemeinen erweist es sich als zweckmäßig, wenn die Schwenkeinrichtung einen Schrittmotor als Antrieb aufweist. Dieser kann dann beispielsweise einen beweglichen Anteil aufweisen, der mit der schwenkbar gelagerten Beleuchtungseinheit derart gekoppelt ist, dass diese die Schwenkbewegung ausführt, wie es im Stand der Technik grundsätzlich bekannt ist. Dabei dürfte es in den meisten Anwendungsfällen ausreichend sein, eine Verschwenkung um eine einzige Achse zu realisieren, wobei jedoch auch Ausgestaltung und Lösungen bekannt sind, um Verschwenkungen um verschiedene Achsen, insbesondere zwei zueinander senkrechte Achsen, über eine geeignete Aktorik zu ermöglichen.

Wie bereits erwähnt, ist es, insbesondere bei Verwendung in einem Kraftfahrzeug, zweckmäßig, wenn die Lichtquelle wenigstens eine LED, insbesondere eine Infrarot-LED, aufweist. LEDs können kleinbauend und verbrauchsarm realisiert werden, was auch die Realisierung der Schwenkeinrichtung vereinfacht. Infrarotlicht kann durch Menschen nicht wahrgenommen werden und stört daher die visuelle Wahrnehmung nicht.

Neben der Time-of-Flight-Kamera betrifft die vorliegende Erfindung auch ein Kraftfahrzeug gemäß Anspruch 8, aufweisend wenigstens eine erfindungsgemäße Time-of-Flight-Kamera. Wie bereits erwähnt wurde, lässt sich die erfindungsgemäße Time-of-Flight-Kamera besonders bevorzugt in einem Kraftfahrzeug einsetzen, da dort aufgrund der unterschiedlichen Betriebszustände bzw. Betriebssituationen oft unterschiedliche Unterbereiche des Erfassungsbereichs von Interesse sind, die durch Analyse von den aktuellen Betriebszustand des Kraftfahrzeugs beschreibenden Zustandsdaten bestimmt und als Ausleuchtungsbereiche an die Time-of-Flight-Kamera weitergegeben werden können.

Besonders bevorzugt ist es mithin, wenn das Kraftfahrzeug ferner wenigstens ein Steuergerät aufweist, das zur Ausgabe eines einen gewünschten Ausleuchtungsbereich beschreibenden Steuersignals an die Time-of-Flight-Kamera ausgebildet ist. Hierbei kann konkret vorgesehen sein, dass das Steuergerät zur Ermittlung eines gewünschten Ausleuchtungsbereichs aus den aktuellen Betriebszustand des Kraftfahrzeugs beschreibenden Zustandsdaten ausgebildet ist. Liegt beispielsweise ein gewisser Lenkeinschlag vor, wird sich das Kraftfahrzeug, abhängig selbstverständlich auch von der Fahrtrichtung, in einen bestimmten Bereich weiterbewegen, der zweckmäßig bevorzugt durch die Time-of-Flight-Kamera zu erfassen ist, welche einen entsprechenden Ausleuchtungsbereich mitgeteilt bekommen kann. Auch kann es zweckmäßig sein, als kritisch erkannte Objekte, für die beispielsweise eine hohe Kollisionswahrscheinlichkeit vorliegt, im Erfassungsbereich genauer bzw. mit größerer Reichweite aufzunehmen, so dass auch hier entsprechende Ausleuchtungsbereiche definiert werden können. Schließlich sei als Beispiel noch genannt, dass bewegte Objekte in der Umgebung des Kraftfahrzeugs detektiert worden sind, die durch Nachführen des Ausleuchtungsbereichs selbstverständlich direkt nachverfolgt werden können. Das Steuergerät bestimmt also letztlich die Bereiche als Ausleuchtungsbereiche, die im aktuellen Betriebszustand des Kraftfahrzeugs von Interesse sind, und wertet dazu die Zustandsdaten, konkret beispielsweise Egodaten über das Kraftfahrzeug selbst, beispielsweise dessen Fahrtrichtung, Lenkeinschlag und Geschwindigkeit, sowie Umgebungsdaten der Time-of-Flight-Kamera selber oder anderer Umgebungssensoren, aus. Dies legt dar, wie vorteilhaft die erfindungsgemäße Time-of-Flight-Kamera in einem Kraftfahrzeug eingesetzt werden kann, um flexibel in hoher Genauigkeit und mit hoher Reichweite die benötigten Daten zu liefern, ohne dass besonders starke Lichtquellen, die zu erhöhten Kosten und zu einem erhöhten Energieverbrauch führen, benötigt werden.

Selbstverständlich gelten sämtliche Ausführungen bezüglich der Time-of-Flight-Kamera auch für das erfindungsgemäße Kraftfahrzeug fort.

Schließlich betrifft die Erfindung ein Verfahren gemäß Anspruch 11.

Entsprechend kann auch beim erfindungsgemäßen Verfahren vorgesehen sein, dass die Anpassung des Ausleuchtungsbereichs ferner durch Ansteuerung der in ihrer Helligkeit regelbaren Lichtquelle und/oder einer anpassbaren Fokussierungsoptik der Beleuchtungseinheit erfolgt. Dabei wird eine anpassbare Fokussierungsoptik bevorzugt, die auch eine Einstellung aufweist, in der bei entsprechender Ausrichtung mittels der Schwenkeinheit der gesamte Erfassungsbereich ausgeleuchtet wird.

Mit besonderem Vorteil kann vorgesehen sein, dass ein gewünschter Ausleuchtungsbereich aus den aktuellen Betriebszustand des Kraftfahrzeugs beschreibenden Zustandsdaten ermittelt wird. Derartige Zustandsdaten können insbesondere Egodaten des Kraftfahrzeugs selbst, beispielsweise dessen Fahrtrichtung, Lenkeinschlag und Geschwindigkeit, sowie gegebenenfalls bereits ausgewertete Umgebungsdaten der Time-of-Flight-Kamera und/oder anderer Umgebungssensoren umfassen, die beispielsweise angeben können, welche Objekte für das Kraftfahrzeug relevant sind.

Entsprechend sieht eine konkrete Ausgestaltung vor, dass der gewünschte Ausleuchtungsbereich in Abhängigkeit einer aktuellen Fahrtrichtung des Kraftfahrzeugs und/oder eines Lenkeinschlag des Kraftfahrzeugs derart gewählt wird, dass ein vom Kraftfahrzeug demnächst befahrener Bereich ausgeleuchtet wird. Eine derartige Ausgestaltung ist insbesondere beim Rangieren des Kraftfahrzeugs vorteilhaft, da sich der Ausleuchtungsbereich letztlich nach der Rangierrichtung richtet und Objekte in dem Bereich mit erhöhter Reichweite und Genauigkeit erfasst, den das Kraftfahrzeug demnächst passieren wird.

Eine weitere konkrete Ausgestaltung sieht vor, dass der gewünschte Ausleuchtungsbereich in Abhängigkeit einer Position eines ein Relevanzkriterium, insbesondere eines eine Kollisionswahrscheinlichkeit auswertenden Relevanzkriteriums, erfüllenden Objekts zur Erfassung des Objekts gewählt wird. Es ist mithin denkbar, Objekte beispielsweise hinsichtlich einer Kollisionswahrscheinlichkeit auf Relevanz zu überprüfen und nur die relevantesten Objekte, beispielsweise die mit der höchsten Kollisionswahrscheinlichkeit, genauer zu erfassen. Relevanz kann selbstverständlich auch durch andere Relevanzkriterien, beispielsweise die Befindlichkeit eines Objekts im vorausberechneten Fahrschlauch des Kraftfahrzeugs, ermittelt werden.

Als letztes Beispiel einer konkreten Ausführungsform kann vorgesehen sein, dass der gewünschte Ausleuchtungsbereich zur Nachverfolgung eines detektierten, relativ zum Kraftfahrzeug bewegten Objektes gewählt wird. Selbstverständlich kann auch dieses Objekt zusätzlich das Relevanzkriterium erfüllen. Existiert also beispielsweise ein hüpfender Ball, ein kleines Kind oder dergleichen als Objekt in der Nähe des Kraftfahrzeugs, und liegen Daten vor, die eine Voraussage der weiteren Bewegung des Objekts ermöglichen, ist es möglich, den Ausleuchtungsbereich zur Nachverfolgung des Objekts zu wählen und somit ständig aktuelle Daten für dieses Objekt in hoher Qualität von der Time-of-Flight-Kamera zu erhalten.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine erfindungsgemäße Time-of-Flight-Kamera,
- Fig. 2: den Erfassungsbereich und verschiedene Ausleuchtungsbereiche bei der erfindungsgemäßen Time-of-Flight-Kamera,
- Fig. 3: eine Prinzipskizze eines erfindungsgemäßen Kraftfahrzeugs,
- Fig. 4: eine erste Situation bei einem rangierenden Kraftfahrzeug,
- Fig. 5: eine zweite Situation bei einem rangierenden Kraftfahrzeug, und
- Fig. 6: eine Situation mit einem bewegten Objekt in der Umgebung des Kraftfahrzeugs.

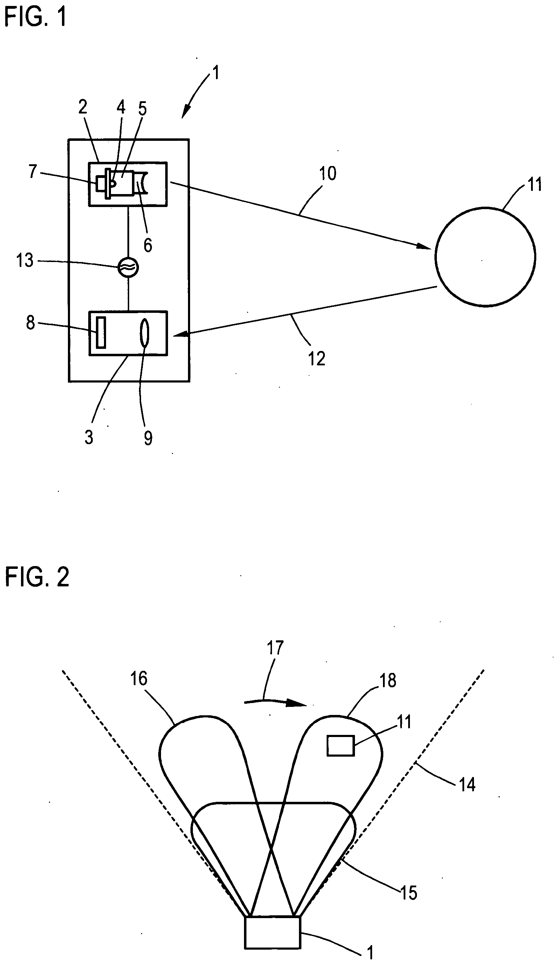

Fig. 1 zeigt eine Prinzipskizze einer erfindungsgemäßen Time-of-Flight-Kamera 1. Diese weist, wie grundsätzlich bekannt, eine Beleuchtungseinheit 2 und eine Empfangseinheit 3 auf. Die Beleuchtungseinheit 2 umfasst dabei im vorliegenden Fall als Lichtquelle eine LED 4, die auf einer Leiterplatte angeordnet ist. Unmittelbar auf die LED 4 aufgesetzt ist eine Strahlformoptik 5 vorgesehen, zusätzlich ist auch eine Fokussierungsoptik 6 vorhanden, die anpassbar ist und über die mithin verschiedene Ausleuchtungsbereiche, insbesondere verschiedene Öffnungswinkel, eingestellt werden können. Diese Möglichkeit zur Einstellung von verschiedenen Ausleuchtungsbereichen wird durch eine Schwenkeinrichtung 7 komplettiert, über die die Beleuchtungseinheit 2 vorliegend um eine Achse senkrecht zur Zeichnungsebene geschwenkt werden kann, um die Ausstrahlrichtung des Lichtes der Lichtquelle, das durch die Strahlformoptik 5 und die Fokussierungsoptik 6 geformt wurde, verändern zu können.

Die Empfangseinheit 3 umfasst, wie grundsätzlich bekannt, neben dem Bildsensor 8 auch eine Optikeinheit 9, die den Erfassungsbereich definiert, mithin angibt, aus welchen Winkelbereichen Bilddaten für die Bildpunkte des Bildsensors 8 empfangen werden können.

Sendet die Beleuchtungseinheit gemäß dem Pfeil 10 Licht aus, kann dieses auf ein Objekt 11 treffen und wird entsprechend gemäß dem Pfeil 12 zu der Time-of-Flight-Kamera 1 zurückreflektiert, wo das Licht dann, wenn sich das Objekt 11 im Erfassungsbereich befindet, von einem entsprechenden Bildpunkt des Bildsensors 8 aufgenommen wird.

Um eine Laufzeit bestimmen zu können, werden vorliegend die Phasenlage des ausgesendeten und des empfangenden Lichts verglichen, wozu ein Modulator 13 vorgesehen ist, der eine Modulationsfrequenz mit einer bestimmten ursprünglichen Phasenlage erzeugt, mit der das Licht durch die Beleuchtungseinheit 2 ausgesendet wird. Das reflektierte Licht weist aufgrund des zurückgelegten Wegs eine Phasenverschiebung auf, mithin eine geänderte Phasenlage. Nachdem das Signal des Modulators 13 auch der Empfangseinheit zur Verfügung steht, können die Phasenlagen verglichen werden, woraus die, Phasenverschiebung und somit auch die Entfernung des Objekts 11 bestimmt werden kann.

Diese Bestimmung kann im Übrigen auch in einer hier der Übersichtlichkeit halber nicht näher gezeigten Steuereinrichtung der Time-of-Flight-Kamera 1 erfolgen. Diese Steuereinrichtung ist im Übrigen auch dazu ausgebildet, einzustellen, in welchen Ausleuchtungsbereich die Beleuchtungseinheit 2 Licht ausstrahlen soll. Dies geschieht durch Ansteuerung der Schwenkeinrichtung 7 und der anpassbaren Fokussierungsoptik 6. Ist die LED 4 in ihrer Helligkeit regelbar, kann eine Reichweitenanpassung auch durch Helligkeitskeitsrege- , lung der LED 4 seitens der Steuereinrichtung erfolgen. Der aktuell gewünschte Ausleuchtungsbereich wird durch ein der Steuereinrichtung extern zugefügtes Steuersignal bestimmt, worauf im Folgenden noch näher eingegangen werden wird.

Fig. 2 zeigt genauer den Erfassungsbereich 14 der Time-of-Flight-Kamera 1 sowie mögliche Ausleuchtungsbereiche 15, 16 und 18. Die Fokussierungsoptik 6 ist so ausgebildet, dass in einer zentralen Stellung der Beleuchtungseinheit 2 und somit der Schwenkeinrichtung 7 bei maximal möglichem Öffnungswinkel ein Ausleuchtungsbereich 15 erzeugt wird, der im Wesentlichen den gesamten Erfassungsbereich 14 im Rahmen der Reichweite abdeckt. Die Reichweite für den Ausleuchtungsbereich 15 ist kürzer, da die Lichtmenge über einen größeren Bereich verteilt werden muss. Wird hingegen durch die Fokussierungsoptik 6 ein schmalerer Ausleuchtungsbereich 16 eingestellt, wird die Lichtmenge über einen kleineren Bereich verteilt, so dass in die Richtung eine hellere Ausleuchtung erfolgt und mithin auch die Reichweite steigt, wie Fig. 2 leicht zu entnehmen ist. Die Schwenkeinrichtung 7 erlaubt es nun, wie durch den Pfeil 17 angedeutet, den Ausleuchtungsbereich 16, der schmaler als der Erfassungsbereich 14 ist, innerhalb des Erfassungsbereichs 14 zu verschwenken, so dass beispielsweise durch eine gezielte Verschwenkung erreicht werden kann, dass das Objekt 11, welches in Fig. 2 ebenso dargestellt ist, erfasst werden kann. Dies ist beispielsweise durch den Ausleuchtungsbereich 18, der durch einfache Verschwenkung des Ausleuchtungsbereichs 16 entsteht, realisiert.

Es sei noch angemerkt, dass eine anpassbare Fokussierungsoptik 6 nicht unbedingt erforderlich ist, um aus dem gesamten Erfassungsbereich Messdaten aufzunehmen, wenn beispielsweise eine kontinuierliche Verschwenkung des Ausleuchtungsbereichs über den Erfassungsbereich 14 erfolgt.

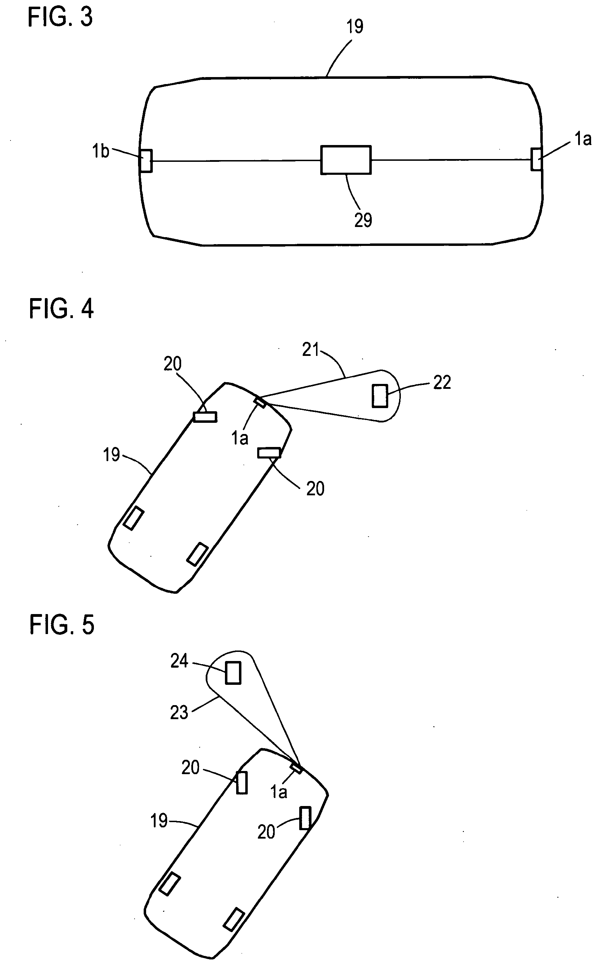

Die erfindungsgemäße Time-of-Flight-Kamera 1 lässt sich besonders vorteilhaft in Kraftfahrzeugen einsetzen. Mithin zeigt Fig. 3 eine Prinzipskizze eines erfindungsgemäßen Kraftfahrzeugs 19, welches vorliegend nach vorne gewandt und nach hinten gewandt je eine Time-of-Flight-Kamera 1a, 1b aufweist, deren Optikeinheit 9 im Übrigen eine Weitwinkeloptikeinheit ist, um möglichst den gesamten Rückraum bzw. das gesamte Vorfeld des Kraftfahrzeugs zu erfassen. Die Time-of-Flight-Kameras 1a, 1b sind mit einem Steuergerät 29 verbunden, welches wenigstens einem Fahrzeugsystem zugeordnet sein kann. Das Steuergerät 29 wertet den Betriebszustand des Kraftfahrzeugs 19 beschreibende Zustandsdaten aus, um geeignete Ausleuchtungsbereiche für die benötigten Daten zu bestimmen und als Steuersignal an die Time-of-Flight-Kameras 1a, 1b weiterzugeben, wo die Steuereinrichtung unter Nutzung der Fokussierungsoptik 6 und der Schwenkeinrichtung 7 diese Ausleuchtungsbereiche einstellen kann, wie beschrieben. Als Zustandsdaten können dabei Egodaten über das Kraftfahrzeug 19 selbst, beispielsweise dessen Fahrtrichtung, Lenkeinschlag und Geschwindigkeit, sowie Umgebungsdaten der Time-of-Flight-Kameras 1a, 1b selbst oder anderer Umgebungssensoren dienen, die insbesondere schon wenigstens teilweise ausgewertet sind.

Dabei können beispielsweise ein Relevanzkriterium erfüllende Objekte, die Rangierrichtung des Kraftfahrzeugs und dergleichen Vorgaben für sinnvolle Ausleuchtungsbereiche liefern, was im Folgenden im Hinblick auf Fig. 4 bis Fig. 6 näher erläutert werden soll. Fig. 4 zeigt das Kraftfahrzeug 19 in einer ersten Rangiersituation, in der das Kraftfahrzeug 19, wie durch die Vorderräder 20 angedeutet, nach rechts fährt. Entsprechend wird das Kraftfahrzeug 19 demnächst den rechts vor ihm gelegenen Bereich überfahren, der mithin auch den relevanten Bereich darstellt, so dass der Ausleuchtungsbereich 21 hier so gewählt ist, dass bei dem momentanen Lenkeinschlag des Kraftfahrzeugs 19 relevante Objekte 22 erfasst werden können. Fig. 5 zeigt den entgegengesetzten Fall, in dem das Kraftfahrzeug 19 nach links gelenkt wird, vgl. wiederum die Vorderräder 20, und entsprechend ein Ausleuchtungsbereich 23, der nach links gerichtet ist, ermittelt wird, um dort relevante Objekte 24 detektieren zu können. Dabei sei darauf hingewiesen, dass die Ausleuchtungsbereiche 21, 23 alternativ oder zusätzlich selbstverständlich auch anhand der Objekte 22, 24 ermittelt werden können, welche ein Relevanzkriterium erfüllen, nämlich eine einen Schwellwert überschreitende Kollisionswahrscheinlichkeit.

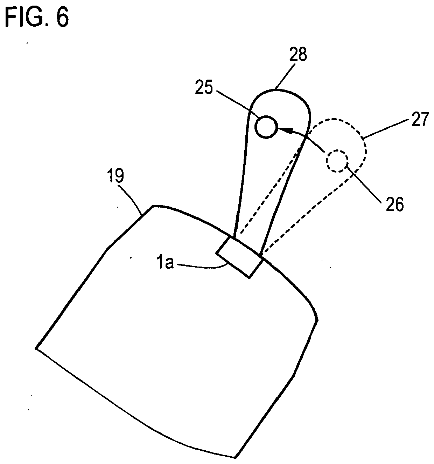

Fig. 6 zeigt schließlich eine Situation, in der sich ein Objekt 25 vor dem Kraftfahrzeug 19 bewegt, beispielsweise ein rollender Ball oder ein kleines Kind. Um dies darzustellen, ist gestrichelt die vorherige Position 26 des Objekts 25 ebenso gezeigt. Ist das Objekt 25 nachverfolgbar, lässt sich auch der Ausleuchtungsbereich so nachführen, dass das Objekt 25 immer erfasst wird und somit ständig aktuelle Daten der Time-of-Flight-Kamera 1a vorliegen. So existierte für die vergangene Position 26 der Ausleuchtungsbereich 27, aktuell wird der Ausleuchtungsbereich 28 verwendet.

## Patentansprüche

1. Time-of-Flight-Kamera (1, 1a, 1b), umfassend eine Beleuchtungseinheit (2) mit einer Lichtquelle zur Ausleuchtung eines Ausleuchtungsbereichs (15, 16, 18, 21, 23, 27, 28) einer Umgebung mit Licht und einer Strahlformoptik (5) und einen Bildsensor (8) mit einer vorgeschalteten Optikeinheit (9) zur Vermessung des von der Umgebung reflektierten Lichts in einem Erfassungsbereich (14), wobei die Beleuchtungseinheit (2) zur Ausleuchtung unterschiedlicher Ausleuchtungsbereiche (15, 16, 18, 21, 23, 27, 28) des Erfassungsbereichs (14) eine Schwenkeinrichtung (7) zur Verschwenkung der Beleuchtungseinheit (2) um wenigstens eine Achse aufweist, **dadurch gekennzeichnet, dass**
die Time-Of-Flight-Kamera (1, 1a, 1b) ferner eine Steuereinrichtung aufweist, die zur Einstellung eines Ausleuchtungsbereichs (15, 16, 18, 21, 23, 27, 28) durch Ansteuerung der Schwenkeinrichtung (7) ausgebildet ist, wobei die Steuereinrichtung zur Ansteuerung der Schwenkeinrichtung (7) zur kontinuierlichen Verschwenkung der Beleuchtungseinheit (2) zur Ausleuchtung über Zeit eines interessierenden Bereichs, der größer als der Ausleuchtungsbereich (15, 16, 18, 21, 23, 27, 28) ist, ausgebildet ist, so dass der Ausleuchtungsbereich den interessierenden Bereich in einer bestimmten Zeit derart überstreicht, dass ein Abscannen des interessierenden Bereichs erfolgt,.

2. Time-of-Flight-Kamera nach Anspruch 1,
**dadurch gekennzeichnet,**
**dass** die Beleuchtungseinheit (2) zusätzlich eine anpassbare Fokussierungsoptik (6) für das von der Lichtquelle ausgesandte Licht aufweist.

3. Time-of-Flight-Kamera nach Anspruch 2,
**dadurch gekennzeichnet,**
**dass** die anpassbare Fokussierungsoptik (6) eine Einstellung aufweist, in der bei zentraler Ausrichtung der Beleuchtungseinheit (2) der gesamte Erfassungsbereich (14) ausgeleuchtet wird.

4. Time-of-Flight-Kamera nach einem der vorangehenden Ansprüche,
**dadurch gekennzeichnet,**
**dass** die Steuereinrichtung zur Auswahl des Ausleuchtungsbereichs (15, 16, 18, 21, 23, 27, 28) in Abhängigkeit eines von extern zugeführten Steuersignals ausgebildet ist.

5. Time-of-Flight-Kamera nach einem der vorangehenden Ansprüche,
**dadurch gekennzeichnet,**
**dass** die Steuereinrichtung zur Einstellung einer Reichweite durch Ansteuerung der Helligkeit der regelbaren Lichtquelle und/oder zur Einstellung einer Reichweite und Ausdehnung des Ausleuchtungsbereichs (15, 16, 18, 21, 23, 27, 28) durch Ansteuerung der anpassbaren Fokussierungsoptik (6) ausgebildet ist.

6. Time-of-Flight-Kamera nach einem der vorangehenden Ansprüche,
**dadurch gekennzeichnet,**
**dass** die Schwenkeinrichtung (7) einen piezoelektrischen Aktor und/oder einen Schrittmotor als Antrieb aufweist.

7. Time-of-Flight-Kamera nach einem der vorangehenden Ansprüche,
**dadurch gekennzeichnet,**
**dass** die Lichtquelle wenigstens eine LED (4) aufweist.

8. Kraftfahrzeug (19), aufweisend wenigstens eine Time-of-Flight-Kamera (1, 1a, 1b) nach einem der vorangehenden Ansprüche.

9. Kraftfahrzeug nach Anspruch 8,
**dadurch gekennzeichnet,**
**dass** es ferner wenigstens ein Steuergerät (29) aufweist, das zur Ausgabe eines einen gewünschten Ausleuchtungsbereich (15, 16, 18, 21, 23, 27, 28) beschreibenden Steuersignals an die Time-of-Flight-Kamera (1, 1a, 1b) ausgebildet ist.

10. Kraftfahrzeug nach Anspruch 9,
**dadurch gekennzeichnet,**
**dass** das Steuergerät (29) zur Ermittlung eines gewünschten Ausleuchtungsbereichs (15, 16, 18, 21, 23, 27, 28) aus den aktuellen Betriebszustand des Kraftfahrzeugs (19) beschreibenden Zustandsdaten ausgebildet ist.

11. Verfahren zum Betrieb einer Time-of-Flight-Kamera (1, 1a, 1b) in einem Kraftfahrzeug (19), welche eine Beleuchtungseinheit (2) mit einer Lichtquelle zur Ausleuchtung eines Ausleuchtungsbereichs (15, 16, 18, 21, 23, 27, 28) einer Umgebung mit Licht und einer Strahlformoptik (5) und einen Bildsensor (8) mit einer vorgeschalteten Optikeinheit (9) zur Vermessung des von der Umgebung reflektierten Lichts in einem Erfassungsbereich (14) aufweist, wobei die Beleuchtungseinheit (2) zur Ausleuchtung unterschiedlicher Ausleuchtungsbereiche (15, 16, 18, 21, 23, 27, 28) des Erfassungsbereichs (14) eine Schwenkeinrichtung (7) zur Verschwenkung der Beleuchtungseinheit (2) um wenigstens eine Achse aufweist,
**dadurch gekennzeichnet, dass** die Time-Of-Flight-Kamera (1, 1a, 1b) ferner eine Steuereinrichtung aufweist, die zur Einstellung eines Ausleuchtungsbereichs (15, 16, 18, 21, 23, 27, 28) durch Ansteuerung der Schwenkeinrichtung (7) ausgebildet ist, wobei die Steuereinrichtung zur Ansteuerung der Schwenkeinrichtung (7) zur kontinuierlichen Verschwenkung der Beleuchtungseinheit (2) zur Ausleuchtung über Zeit eines interessierenden Bereichs, der größer als der Ausleuchtungsbereich (15, 16, 18, 21, 23, 27, 28) ist, ausgebildet ist, so dass der Ausleuchtungsbereich den interessierenden Bereich in einer bestimmten Zeit derart überstreicht, dass ein Abscannen des interessierenden Bereichs erfolgt.

12. Verfahren nach Anspruch 11,
**dadurch gekennzeichnet,**
**dass** die Anpassung des Ausleuchtungsbereichs (15, 16, 18, 21, 23, 27, 28) ferner durch Ansteuerung der in ihrer Helligkeit regelbaren Lichtquelle und/oder einer anpassbaren Fokussierungsoptik (6) der Beleuchtungseinheit (2) erfolgt.

13. Verfahren nach Anspruch 11 oder 12,
**dadurch gekennzeichnet,**
**dass** ein gewünschter Ausleuchtungsbereich (15, 16, 18, 21, 23, 27, 28) aus den aktuellen Betriebszustand des Kraftfahrzeugs (19) beschreibenden Zustandsdaten ermittelt wird.

14. Verfahren nach Anspruch 13,
**dadurch gekennzeichnet,**
**dass** der gewünschte Ausleuchtungsbereich (15, 16, 18, 21, 23, 27, 28) in Abhängigkeit einer aktuellen Fahrtrichtung des Kraftfahrzeugs (19) und/oder eines Lenkeinschlags des Kraftfahrzeugs (19) derart gewählt wird, dass ein vom Kraftfahrzeug (19) demnächst befahrener Bereich ausgeleuchtet wird.

15. Verfahren nach Anspruch 13 oder 14,
**dadurch gekennzeichnet,**
**dass** der gewünschte Ausleuchtungsbereich (15, 16, 18, 21, 23, 27, 28) in Abhängigkeit einer Position eines ein Relevanzkriterium, insbesondere eines eine Kollisionswahrscheinlichkeit auswertenden Relevanzkriteriums, erfüllenden Objekts (11, 22, 24, 25) zur Erfassung des Objekts (11, 22, 24, 25) gewählt wird.

16. Verfahren nach einem der Ansprüche 13 bis 15,
**dadurch gekennzeichnet,**
**dass** der gewünschte Ausleuchtungsbereich (15, 16, 18, 21, 23, 27, 28) zur Nachverfolgung eines detektierten, relativ zum Kraftfahrzeug (1) bewegten Objekts (25) gewählt wird.

## Claims

1. Time-of-flight camera (1, 1a, 1b), comprising a lighting unit (2) having a light source for illuminating an illumination zone (15, 16, 18, 21, 23, 27, 28) of an environment with light, and a beam-forming lens system (5) and an image sensor (8) having an upstream lens unit (9) for measuring the light reflected by the environment in a detection zone (14),
wherein,
in order to illuminate different illumination zones (15, 16, 18, 21, 23, 27, 28) in the detection zone (14), the lighting unit (2) has a pivoting apparatus (7) for pivoting the lighting unit (2) about at least one axis,
**characterised in that**
the time-of-flight camera (1 , 1a, 1b) further has a control apparatus which is designed to set an illumination zone (15, 16, 18, 21, 23, 27, 28) by controlling the pivoting apparatus (7), wherein the control apparatus is designed to control the pivoting apparatus (7) in order to continuously pivot the lighting unit (2) to illuminate over time a zone of interest which is larger than the illumination zone (15, 16, 18, 21, 23, 27, 28), such that the illumination zone sweeps over the area of interest in a given time so that the zone of interest is scanned.

2. Time-of-flight camera according to claim 1,
**characterised in that**
the lighting unit (2) additionally has an adjustable focusing lens system (6) for the light emitted by the light source.

3. Time-of-flight camera according to claim 2,
**characterised in that**
the adjustable focusing lens system (6) has a setting in which the entire detection zone (14) is illuminated when the lighting unit (2) is aligned centrally.

4. Time-of-flight camera according to any of the preceding claims,
**characterised in that**
the control apparatus is designed to select the illumination zone (15, 16, 18, 21, 23, 27, 28) as a function of an externally supplied control signal.

5. Time-of-flight camera according to any of the preceding claims,
**characterised in that**
the control apparatus is designed to set a range by controlling the brightness of the controllable light source and/or to set a range and extent of the illumination zone (15, 16, 18, 21, 23, 27, 28) by controlling the adjustable focusing lens system (6).

6. Time-of-flight camera according to any of the preceding claims,
**characterised in that**
the pivoting apparatus (7) has a piezoelectric actuator and/or a stepping motor as a drive.

7. Time-of-flight camera according to any of the preceding claims,
**characterised in that**
the light source has at least one LED (4).

8. Motor vehicle (19), having at least one time-of-flight camera (1, 1a, 1b) according to any of the preceding claims.

9. Motor vehicle according to claim 8,
**characterised in that**
it further has at least one control device (29) which is designed to output a control signal describing a desired illumination zone (15, 16, 18, 21, 23, 27, 28) to the time-of-flight camera (1, 1a, 1b).

10. Motor vehicle according to claim 9,
**characterised in that**
the control device (29) is designed to determine a desired illumination zone (15, 16, 18, 21, 23, 27, 28) from status data describing the current operating state of the motor vehicle (19).

11. Method for operating a time-of-flight camera (1, 1a, 1b) in a motor vehicle (19), which camera has a lighting unit (2) having a light source for illuminating an illumination zone (15, 16, 18, 21, 23, 27, 28) of an environment with light, and a beam-forming lens system (5) and an image sensor (8) having an upstream lens unit (9) for measuring the light reflected by the environment in a detection zone (14),
wherein,
in order to illuminate different illumination zones (15, 16, 18, 21, 23, 27, 28) in the detection zone (14), the lighting unit (2) has a pivoting apparatus (7) for pivoting the lighting unit (2) about at least one axis,
**characterised in that**
the time-of-flight camera (1 , 1a, 1b) further has a control apparatus which is designed to set an illumination zone (15, 16, 18, 21, 23, 27, 28) by controlling the pivoting apparatus (7), wherein the control apparatus is designed to control the pivoting apparatus (7) in order to continuously pivot the lighting unit (2) to illuminate over time a zone of interest which is larger than the illumination zone (15, 16, 18, 21, 23, 27, 28), such that the illumination zone sweeps over the area of interest in a given time so that the zone of interest is scanned.

12. Method according to claim 11,
**characterised in that**
the illumination zone (15, 16, 18, 21, 23, 27, 28) is further adjusted by controlling the light source, the brightness of which is controllable, and/or an adjustable focusing lens system (6) of the illumination unit (2).

13. Method according to claim 11 or 12,
**characterised in that**
a desired illumination zone (15, 16, 18, 21, 23, 27, 28) is determined from status data describing the current operating state of the motor vehicle (19).

14. Method according to claim 13,
**characterised in that**
the desired illumination zone (15, 16, 18, 21, 23, 27, 28) is selected as a function of a current direction of travel of the motor vehicle (19) and/or a steering angle of the motor vehicle (19) such that a zone which will soon be travelled on by the motor vehicle (19) is illuminated.

15. Method according to claim 13 or 14,
**characterised in that**
the desired illumination zone (15, 16, 18, 21, 23, 27, 28) is selected as a function of a position of an object (11, 22, 24, 25) which fulfils a relevance criterion, in particular a relevance criterion which evaluates a collision probability, for detecting the object (11, 22, 24, 25).

16. Method according to any of claims 13 to 15,
**characterised in that**
the desired illumination zone (15, 16, 18, 21, 23, 27, 28) is selected in order to track a detected object (25) moving relative to the motor vehicle (1).

## Revendications

1. Caméra de temps de vol (1, 1a, 1b), comprenant un dispositif d'éclairage (2) avec une source lumineuse pour éclairer une zone d'éclairage (15, 16, 18, 21, 23, 27, 28) d'un environnement avec de la lumière et une optique de mise en forme de faisceau (5) et un capteur d'image (8) avec une unité optique (9) placée en amont pour mesurer la lumière réfléchie par l'environnement dans une zone de détection (14),
dans laquelle
le dispositif d'éclairage (2) destiné à éclairer différentes zones d'éclairage (15, 16, 18, 21, 23, 27, 28) de la zone de détection (14) présente un appareil de rotation (7) pour faire pivoter le dispositif d'éclairage (2) autour d'au moins un axe,
**caractérisée en ce que**
la caméra à temps de vol (1, 1a, 1b) présente en outre un appareil de commande qui est réalisé pour régler une zone d'éclairage (15, 16, 18, 21, 23, 27, 28) en actionnant l'appareil de rotation (7), dans lequel l'appareil de commande destiné à actionner l'appareil de rotation (7) est conçu pour faire pivoter en continu le dispositif d'éclairage (2) pour l'éclairage dans le temps d'une zone d'intérêt qui est plus grande que la zone d'éclairage (15, 16, 18, 21, 23, 27, 28), de sorte que la zone d'éclairage balaie la zone d'intérêt dans un certain temps de sorte que le scan de la zone d'intérêt ait lieu.

2. Caméra de temps de vol selon la revendication 1,
**caractérisée en ce que**
le dispositif d'éclairage (2) présente en outre une optique de mise au point (6) adaptable pour la lumière émise par la source lumineuse.

3. Caméra de temps de vol selon la revendication 2,
**caractérisée en ce que**
l'optique de mise au point (6) adaptable présente un réglage dans lequel, lors de l'alignement central du dispositif d'éclairage (2), toute la zone de détection (14) est éclairée.

4. Caméra de temps de vol selon l'une quelconque des revendications précédentes,
**caractérisée en ce que**
l'appareil de commande est réalisé pour sélectionner la zone d'éclairage (15, 16, 18, 21, 23, 27, 28) en fonction d'un signal de commande provenant de l'extérieur.

5. Caméra de temps de vol selon l'une quelconque des revendications précédentes,
**caractérisée en ce que**
l'appareil de commande est réalisé pour régler une plage en activant la luminosité de la source lumineuse ajustable et/ou pour régler une plage et une étendue de la zone d'éclairage (15, 16, 18, 21, 23, 27, 28) en activant l'optique de mise au point (6) adaptable.

6. Caméra de temps de vol selon l'une quelconque des revendications précédentes,
**caractérisée en ce que**
l'appareil de rotation (7) présente un actionneur piézoélectrique et/ou un moteur pas à pas comme entraînement.

7. Caméra de temps de vol selon l'une quelconque des revendications précédentes,
**caractérisée en ce que**
la source lumineuse présente au moins une DEL (4).

8. Véhicule à moteur (19), présentant au moins une caméra de temps de vol (1, 1a, 1b) selon l'une quelconque des revendications précédentes.

9. Véhicule à moteur selon la revendication 8,
**caractérisé en ce**
**qu'**il présente en outre au moins un dispositif de commande (29) qui est réalisé pour délivrer un signal de commande décrivant une zone d'éclairage souhaitée (15, 16, 18, 21, 23, 27, 28) à la caméra de temps de vol (1, 1a, 1b).

10. Véhicule à moteur selon la revendication 9,
**caractérisé en ce que**
le dispositif de commande (29) est réalisé pour déterminer une zone d'éclairage souhaitée (15, 16, 18, 21, 23, 27, 28) à partir de données d'état décrivant l'état de fonctionnement actuel du véhicule à moteur (19).

11. Procédé pour faire fonctionner une caméra à temps de vol (1, 1a, 1b) dans un véhicule à moteur (19), lequel présente un dispositif d'éclairage (2) avec une source lumineuse pour éclairer une zone d'éclairage (15, 16, 18, 21, 23, 27, 28) d'un environnement avec de la lumière et une optique de mise en forme de faisceau (5) et un capteur d'image (8) avec une unité optique (9) placée en amont pour mesurer la lumière réfléchie par l'environnement dans une zone de détection (14),
dans lequel
le dispositif d'éclairage (2) destiné à éclairer différentes zones d'éclairage (15, 16, 18, 21, 23, 27, 28) de la zone de détection (14) présente un appareil de rotation (7) destiné à faire pivoter le dispositif d'éclairage (2) autour d'au moins un axe,
**caractérisé en ce que** la caméra de temps de vol (1, 1a, 1b) présente en outre un appareil de commande qui est réalisé pour régler une zone d'éclairage (15, 16, 18, 21, 23, 27, 28) en actionnant l'appareil de rotation (7), dans lequel l'appareil de commande destiné à actionner l'appareil de rotation (7) est réalisé pour faire pivoter en continu le dispositif d'éclairage (2) pour l'éclairage dans le temps d'une zone d'intérêt, qui est plus grande que la zone d'éclairage (15, 16, 18, 21, 23, 27, 28), de sorte que la zone d'éclairage balaie la zone d'intérêt dans un certain temps de sorte que le scan de la zone d'intérêt ait lieu.

12. Procédé selon la revendication 11,
**caractérisé en ce que**
l'adaptation de la zone d'éclairage (15, 16, 18, 21, 23, 27, 28) s'effectue en outre par l'activation de la source lumineuse ajustable en luminosité et/ou d'une optique de mise au point (6) adaptable du dispositif d'éclairage (2).

13. Procédé selon la revendication 11 ou 12,
**caractérisé en ce qu'**
une zone d'éclairage (15, 16, 18, 21, 23, 27, 28) souhaitée est déterminée à partir des données d'état décrivant l'état de fonctionnement actuel du véhicule à moteur (19).

14. Procédé selon la revendication 13,
**caractérisé en ce que**
la zone d'éclairage (15, 16, 18, 21, 23, 27, 28) souhaitée est choisie en fonction d'une direction de déplacement actuelle du véhicule à moteur (19) et/ou d'un angle de braquage du véhicule à moteur (19) de sorte qu'une zone qui sera bientôt parcourue par le véhicule à moteur (19) soit éclairée.

15. Procédé selon la revendication 13 ou 14,
**caractérisé en ce que**
la zone d'éclairage (15, 16, 18, 21, 23, 27, 28) souhaitée est sélectionnée en fonction de la position d'un objet (11, 22, 24, 25) remplissant un critère de pertinence, en particulier un critère de pertinence évaluant une probabilité de collision, pour la détection de l'objet (11, 22, 24, 25).

16. Procédé selon l'une quelconque des revendications 13 à 15,
**caractérisé en ce que**
la plage d'éclairage (15, 16, 18, 21, 23, 27, 28) souhaitée est sélectionnée pour la poursuite d'un objet détecté (25) se déplaçant par rapport au véhicule à moteur (1).
